# EUROPEAN PATENT APPLICATION

(11) **EP 4 502 860 A1**
(43) Date of publication of application: **05.02.2025**
(21) Application number: 24191348.2
(22) Date of filing: 29.07.2024
(51) Int. Cl.: G06F 40/169, G06F 40/30

(54) **EVALUATION OF ELECTRONIC DOCUMENTS FOR ADVERSE SUBJECT MATTER**

(30) Priority: 03.08.2023 FI 20235865
(71) Applicant: Nokia Solutions and Networks Oy, 02610 Espoo (FI)
(72) Inventor: ZHANG, Yihao, Chatham, NJ (US); SANIEE, Iraj, New Providence, NJ (US); TANDON, Ashish, Claygate, Surrey (GB); BAUER, Martin, Pasching (AT); GRALEC, Konrad, Kobierzyce (PL)
(74) Representative: Nokia EPO representatives

(57) **Abstract**

Apparatus and method of evaluating electronic documents. In an embodiment, the method comprises obtaining a dataset comprising labeled text samples associated with subject matter categories and having a respective label comprises a risk level. The method comprises applying a machine learning (ML) model to the labeled text samples to vectorize the labeled text samples, and determining a representative vector for groups of text sample vectors associated with a same risk level in each subject matter category. The method comprises displaying an electronic document, extracting a text segment, applying the ML model to the text segment to vectorize the text segment, mapping the text segment vector to a subject matter category, determining the risk level associated with the text segment based on a relation between the text segment vector and representative vectors associated with the subject matter category, and annotating the text segment with an annotation based on the risk level.

## Description

### Technical Field

This disclosure is related to the field of machine learning, and in particular, to training machine learning models to classify sets of data.

### Background

Documents may need to be reviewed to identify subject matter that may expose a person or other entity to risk or liability. For example, legal contracts may be reviewed to identify statements or clauses that are potentially unfavorable to one's interest. When a large number of documents need to be reviewed, it becomes a problem that the documents cannot be practically reviewed by people.

### Summary

Described herein are a system and method that use Machine Learning (ML) to evaluate electronic documents to identify potentially adverse subject matter. As a general overview, a document evaluation ML model is trained using a limited set of labeled text samples for categories of interest (referred to herein as subject matter categories). The document evaluation ML model may then be used to evaluate an electronic document by identifying a risk level for text segments within a subject matter category, and annotate the text segments based on the risk level in the subject matter category. One technical benefit is electronic documents may be analyzed or evaluated in a quick and efficient manner to identify potentially adverse subject matter.

In an embodiment, a method of processing electronic documents is disclosed. The method comprises obtaining a dataset comprising labeled text samples associated with a plurality of subject matter categories, where a respective label associated with each of the labeled text samples comprises a risk level corresponding to a respective labeled text sample. The method further comprises applying a pre-trained ML model to the labeled text samples to vectorize the labeled text samples into text sample vectors, and determining a respective representative vector for respective groups of text sample vectors associated with a same risk level in each subject matter category. The method further comprises displaying an electronic document, extracting a text segment from the electronic document, applying the pre-trained ML model to the extracted text segment to vectorize the extracted text segment into a text segment vector, mapping the text segment vector to a subject matter category of the plurality of subject matter categories, determining the risk level associated with the extracted text segment based on a relation between the text segment vector and representative vectors associated with the mapped subject matter category, annotating the extracted text segment with an annotation based on the risk level associated with the extracted text segment, and displaying the annotation for the extracted text segment in the displayed electronic document.

In an embodiment, the determining the risk level comprises determining a nearest representative vector to the text segment vector from the representative vectors associated with the mapped subject matter category, where the risk level associated with the nearest representative vector comprises the risk level associated with the extracted text segment.

In an embodiment, the determining the risk level comprises determining the risk level associated with the extracted text segment based on an interpolation between two or more of the representative vectors associated with the mapped subject matter category.

In an embodiment, the method further comprises performing few-shot learning with the labeled text samples for N number of the subject matter categories, and K number of the labeled text samples from each of the N number of the subject matter categories, where the K number of the labeled text samples is in a range of one to five.

In an embodiment, the annotating comprises annotating the extracted text segment when the risk level is above a risk threshold.

In an embodiment, the annotating comprises highlighting the extracted text segment with a distinguishing color.

In an embodiment, the annotating comprises displaying a suggested modification regarding the extracted text segment.

In an embodiment, the extracting comprises applying another ML model to partition the electronic document into a collection of text segments.

In an embodiment, the electronic document comprises a legal contract.

In an embodiment, an apparatus is disclosed configured to process electronic documents. The apparatus comprises at least one processor, and at least one memory storing instructions that, when executed by the at least one processor, cause the apparatus at least to obtain a dataset comprising labeled text samples associated with a plurality of subject matter categories, where a respective label associated with each of the labeled text samples comprises a risk level corresponding to a respective labeled text sample. The at least one processor further causes the apparatus at least to apply a pre-trained ML model to the labeled text samples to vectorize the labeled text samples into text sample vectors, and determine a respective representative vector for respective groups of text sample vectors associated with a same risk level in each subject matter category. The at least one processor further causes the apparatus at least to display an electronic document, extract a text segment from the electronic document, apply the pre-trained ML model to the extracted text segment to vectorize the extracted text segment into a text segment vector, map the text segment vector to a subject matter category of the plurality of subject matter categories, determine the risk level associated with the extracted text segment based on a relation between the text segment vector and representative vectors associated with the mapped subject matter category, annotate the extracted text segment with an annotation based on the risk level associated with the extracted text segment, and display the annotation for the extracted text segment in the displayed electronic document.

In an embodiment, the at least one processor further causes the apparatus at least to perform few-shot learning with the labeled text samples for N number of the subject matter categories, and K number of the labeled text samples from each of the N number of the subject matter categories, where the K number of the labeled text samples is in a range of one to five.

In an embodiment, the at least one processor further causes the apparatus at least to annotate the extracted text segment when the risk level is above a risk threshold.

In an embodiment, the at least one processor further causes the apparatus at least to highlight the extracted text segment with a distinguishing color.

In an embodiment, the at least one processor further causes the apparatus at least to display a suggested modification regarding the extracted text segment.

In an embodiment, the at least one processor further causes the apparatus at least to apply another ML model to partition the electronic document into a collection of text segments.

In an embodiment, an apparatus is disclosed configured to process electronic documents. The apparatus comprises a means for obtaining a dataset comprising labeled text samples associated with a plurality of subject matter categories, where a respective label associated with each of the labeled text samples comprises a risk level corresponding to a respective labeled text sample. The apparatus comprises a means for applying a pre-trained ML model to the labeled text samples to vectorize the labeled text samples into text sample vectors, and a means for determining a respective representative vector for respective groups of text sample vectors associated with a same risk level in each subject matter category. The apparatus comprises a means for displaying an electronic document, a means for extracting a text segment from the electronic document, a means for applying the pre-trained ML model to the extracted text segment to vectorize the extracted text segment into a text segment vector, a means for mapping the text segment vector to a subject matter category of the plurality of subject matter categories, a means for determining the risk level associated with the extracted text segment based on a relation between the text segment vector and representative vectors associated with the mapped subject matter category, a means for annotating the extracted text segment with an annotation based on the risk level associated with the extracted text segment, and a means for displaying the annotation for the extracted text segment in the displayed electronic document.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 is a block diagram of a document evaluator in an illustrative embodiment.
FIG. 2 is a schematic diagram of functional operations of a document evaluator in an illustrative embodiment.
FIG. 3A is a block diagram illustrating a support dataset in an illustrative embodiment.
FIG. 3B illustrates a standard format template in an illustrative embodiment.
FIG. 4 is a block diagram of an electronic document in an illustrative embodiment.
FIG. 5A is a flow chart illustrating a method of training an ML model in an illustrative embodiment.
FIG. 5B is a flow chart illustrating a method of using an ML model to evaluate one or more electronic documents in an illustrative embodiment.
FIG. 5C is a flow chart illustrating a method of retraining an ML model in an illustrative embodiment.
FIG. 6A illustrates an example of text sample vectors clustered into groups in an illustrative embodiment.
FIG. 6B illustrates groups of text sample vectors for a subject matter category in an illustrative embodiment.
FIG. 6C illustrates groups of text sample vectors for a subject matter category in an illustrative embodiment.
FIG. 7 is a block diagram of a support dataset for few-shot learning in an illustrative embodiment.
FIG. 8 is a block diagram of subject matter categories associated with text segments of an electronic document in an illustrative embodiment.
FIG. 9 is a block diagram illustrating a GUI displaying an electronic document in an illustrative embodiment.
FIG. 10 is a block diagram illustrating a text segment annotated in an electronic document in an illustrative embodiment.
FIG. 11 is a block diagram illustrating a text segment annotated in an electronic document in an illustrative embodiment.
FIG. 12 is a block diagram illustrating a text segment annotated in an electronic document in an illustrative embodiment.
FIG. 13 is a schematic diagram of a retraining phase in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

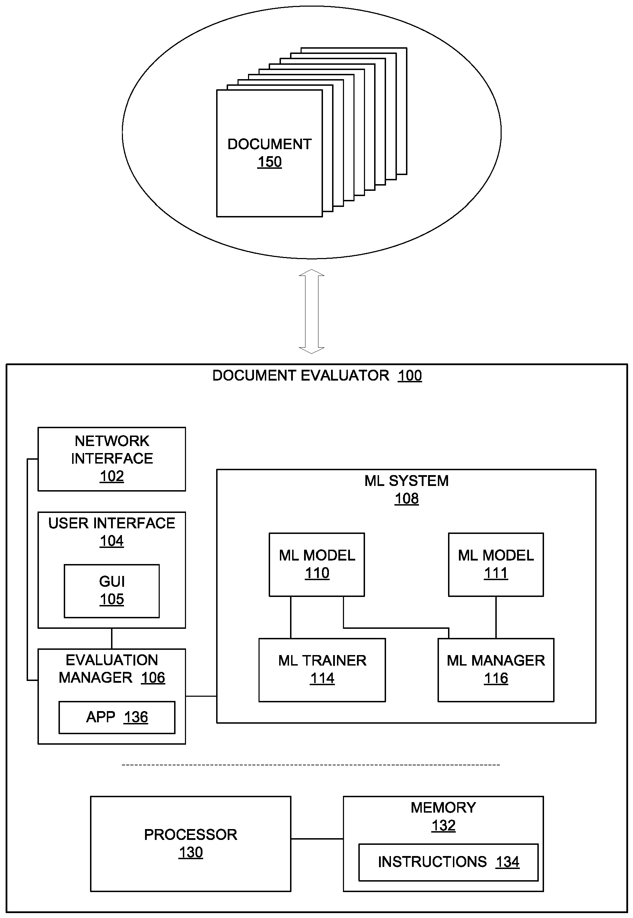

FIG. 1 is a block diagram of a document evaluator 100 in an illustrative embodiment. Document evaluator 100 is a server, device, apparatus, equipment (including hardware), means, etc., configured to process or analyze electronic documents 150. In this embodiment, document evaluator 100 includes the following subsystems: a network interface component 102, a user interface component 104, an evaluation manager 106, and an ML system 108. Network interface component 102 is a hardware component or circuitry that communicates with external devices, systems, or entities. For example, network interface component 102 may receive data or files (e.g., electronic documents 150) over a network. Network interface component 102 may receive the data over a wide area network connection (e.g., via the internet), such as via a messaging protocol, email, a file transfer protocol, an Application Programming Interface (API), etc. Network interface component 102 may receive the data over a local area network connection, a local bus, etc.

User interface component 104 may comprise circuitry, logic, hardware, means, etc., configured to interact with an end user. For example, user interface component 104 may include a display, screen, touch screen, or the like (e.g., a Liquid Crystal Display (LCD), a Light Emitting Diode (LED) display, etc.). User interface component 104 may include a keyboard or keypad, a tracking device (e.g., a trackball or trackpad), a speaker, a microphone, etc. User interface component 104 may provide a Graphical User Interface (GUI) 105, portal, etc., configured to display information to an end user, such as through a display. User interface component 104 may also receive input, commands, etc., from an end user.

Evaluation manager 106 may comprise circuitry, logic, hardware, means, etc., configured to perform one or more actions or tasks to evaluate electronic documents 150. An electronic document 150 comprises electronic media content used in electronic form. For example, an electronic document 150 may comprise a document in a word processing file format, such as Microsoft Word, a document in Portable Document Format (PDF), a document in another type of file format, etc. Evaluation manager 106 may execute an application 136 configured to open and/or edit an electronic document 150.

ML system 108 may comprise circuitry, logic, hardware, means, etc., configured to use machine learning techniques to perform functions, such as evaluate electronic documents 150. In this embodiment, an ML model 110 (e.g., a document evaluation ML model, a first ML model, etc.) is illustrated for ML system 108. In general, ML model 110 learns from training samples and a corresponding label, and is trained to classify or categorize data into one or more of a set of "classes". ML system 108 further includes an ML trainer 114 and an ML manager 116. ML trainer 114 may comprise circuitry, logic, hardware, means, etc., configured to train and/or re-train one or more ML models. ML manager 116 may comprise circuitry, logic, hardware, means, etc., configured to manage one or more ML models 110 as trained. For example, ML manager 116 is configured to input data into ML model 110 during testing or after deployment, and receive output from the ML model 110, along with other functions. ML system 108 may further include ML model 111, which may comprise a natural language processing (NLP) model configured to partition an electronic document 150 into smaller text segments.

One or more of the subsystems of document evaluator 100 may be implemented on a hardware platform comprised of analog and/or digital circuitry. For example, document evaluator 100 may be implemented on one or more processors 130 that execute instructions 134 (i.e., computer readable code) for software that are loaded into memory 132. A processor 130 comprises an integrated hardware circuit configured to execute instructions 134 to provide the functions of document evaluator 100. Processor 130 may comprise a set of one or more processors or may comprise a multi-processor core, depending on the particular implementation. Memory 132 is a non-transitory computer readable storage medium for data, instructions, applications, etc., and is accessible by processor 130. Memory 132 is a hardware storage device capable of storing information on a temporary basis and/or a permanent basis. Memory 132 may comprise a random-access memory, or any other volatile or non-volatile storage device. In an example, one or more of the subsystems of document evaluator 100 may be implemented on a cloud-computing platform or another type of processing platform. In an example, document evaluator 100 may be implemented on a combination of a hardware platform and a cloud computing platform.

Document evaluator 100 may include additional components that are not shown for the sake of brevity.

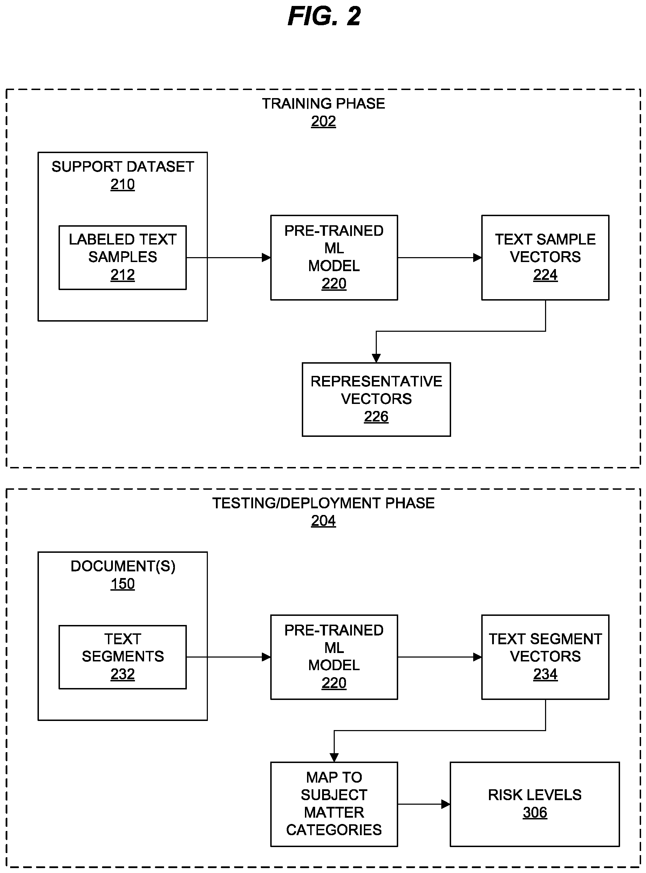

FIG. 2 is a schematic diagram of functional operations of document evaluator 100 in an illustrative embodiment. Document evaluator 100 operates in a training phase 202, and a testing or deployment phase 204. In the training phase 202, ML trainer 114 operates to train ML model 110. In the testing/deployment phase 204, ML manager 116 uses the trained ML model 110 to classify or categorize text segments in electronic documents 150.

In the training phase 202, ML trainer 114 trains ML model 110 using a support dataset 210 that includes labeled text samples 212. For machine learning in general, an ML model is trained based on a training dataset, and a support dataset 210 as described herein may also be referred to as a "training dataset" in some embodiments. However, a typical training dataset may be quite large. For example, a typical training dataset may have many samples per "class", and is large enough for training a deep neural network. In an embodiment herein, the support dataset 210 comprises a limited set of labeled text samples 212 smaller than a typical training dataset. For example, the support dataset 210 may have a few (e.g., less than five) labeled text samples 212 per "class", which is insufficient for training a deep neural network.

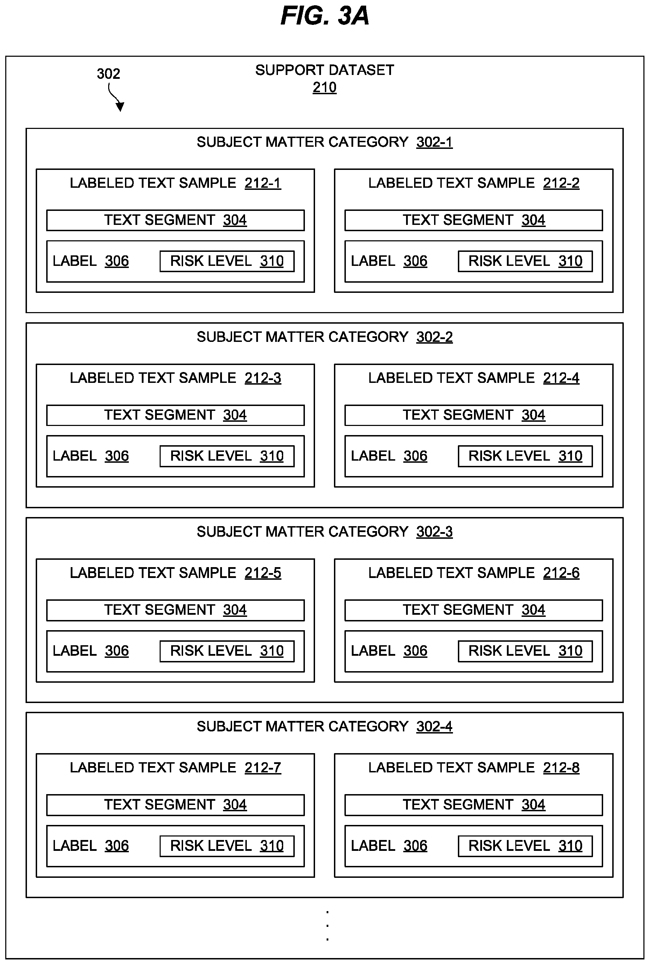

FIG. 3A is a block diagram illustrating a support dataset 210 in an illustrative embodiment. Support dataset 210 includes labeled text samples 212 (e.g., labeled text samples 212-1, 212-2, ..., 212-8) for a plurality of subject matter categories 302. A subject matter category 302 is a classification associated with a topic, subject, etc., within an electronic document. For example, a subject matter category 302 may comprise "Payment Terms", "Penalties", "Fees or Costs", "Remedies", etc.

Within support dataset 210, a number of labeled text samples 212 are defined for each subject matter category 302. As described above, the support dataset 210 may have a "few" labeled text samples 212 per subject matter category 302. Thus, the number of labeled text samples 212 per subject matter category 302 may be less than five, in a range of one to five, or another desired range. One technical benefit is less data may be needed to create the support dataset 210 used to train ML model 110.

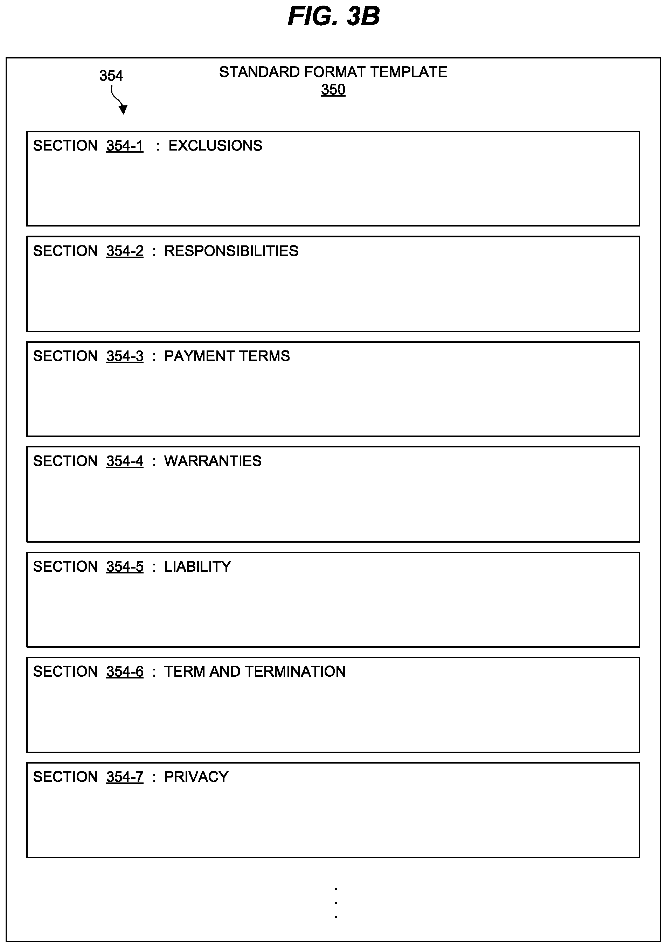

Each labeled text sample 212 includes a text segment 304 and an associated label 306. A text segment 304 comprises a set or group of words (including numbers), and may comprise a phrase, a clause, a sentence, or another sequence of words. Label 306 is a description that indicates what the text segment 304 represents. In an embodiment, a label 306 may comprise a risk level 310 within a subject matter category 302. A risk level 310 is a ranking, degree, or score of the risk associated with the text segment 304 of the labeled text sample 212. For example, the risk level 310 may be a numerical value within a predefined range, such as "1", "2", "3", "4", "5", etc. In another example, the risk level 310 may be a string, such as "low", "moderate", or "high". A risk level 310 may also be referred to herein as a risk designation, uncertainty level or designation, a suspicion level or designation, etc. Although one example of labeled text samples 212 is shown in FIG. 3, the label 306 may include other data or information as desired. One technical benefit is a limited set of labeled text samples 212 may be used to train ML model 110 to output a classification within a subject matter category 302 for a text segment that is input to the ML model 110.

In an embodiment, subject matter categories 302 may be mapped to or associated with sections of a standard format template. A standard format template provides an example of preferred or approved content of an electronic document that serves as a basis for evaluation or comparison of the electronic document. FIG. 3B illustrates a standard format template 350 in an illustrative embodiment. In this example, standard format template 350 includes a plurality of sections 354. A section 354 as described herein generally refers to a distinct part or portion of an electronic document, and may alternatively be referred to as a subsection, part, element, article, clause, etc. It may be assumed herein that the standard format template 350 is logically organized into the sections 354 for a preferred format of an electronic document. The standard format template 350 in FIG. 3B illustrates some example sections 354, such as "Exclusions" for section 354-1, "Responsibilities" for section 354-2, "Payment Terms" for section 354-3, "Warranties" for section 354-4, "Liability" for section 354-5, "Term and Termination" for section 354-6, and "Privacy" for section 354-7. These sections 354 are provided merely as an example, and other sections are considered herein.

In FIG. 3A, a subject matter category of support dataset 210 may be mapped to a section 354 of the standard format template 350. For example, subject matter category 302-1 may be mapped to section 354-1, subject matter category 302-2 may be mapped to section 354-2, subject matter category 302-3 may be mapped to section 354-3, etc.

In FIG. 2, the labeled text samples 212 of the support dataset 210 are "vectorized" by a pre-trained ML model 220. A pre-trained ML model 220 is a deep learning model that is pre-trained based on a large corpus of unlabeled text data. Pre-trained ML model 220 computes embeddings (i.e., vector representations) for sentences, paragraphs, clauses, or other text segments, such as for natural language processing (NLP). In an embodiment, pre-trained ML model 220 may comprise an open-source transformer model, such as BERT (Bidirectional Encoder Representations from Transformers), RoBERTa (Robustly Optimized BERT-Pretraining Approach), or another model. In other embodiments, pre-trained ML model 220 may be trained by ML trainer 114 based on a corpus of unlabeled text data, which is outside the scope of this disclosure.

ML trainer 114 inputs or applies the labeled text samples 212 of the support dataset 210 to pre-trained ML model 220 to generate text sample vectors 224. A text sample vector 224 is a tuple of values that represents the text segment 304 of a labeled text sample 212. For example, a text sample vector 224 generated by a RoBERTa transformer model may be embedded into a 768-dimensional space. ML trainer 114 may then cluster the text sample vectors 224 of the subject matter categories 302 into groups or clusters having the same or equivalent risk level, and determine or compute representative vectors 226 for the groups of text sample vectors 224. One technical benefit is ML model 110 is trained to classify text segments, such as in an electronic document 150, in an efficient manner.

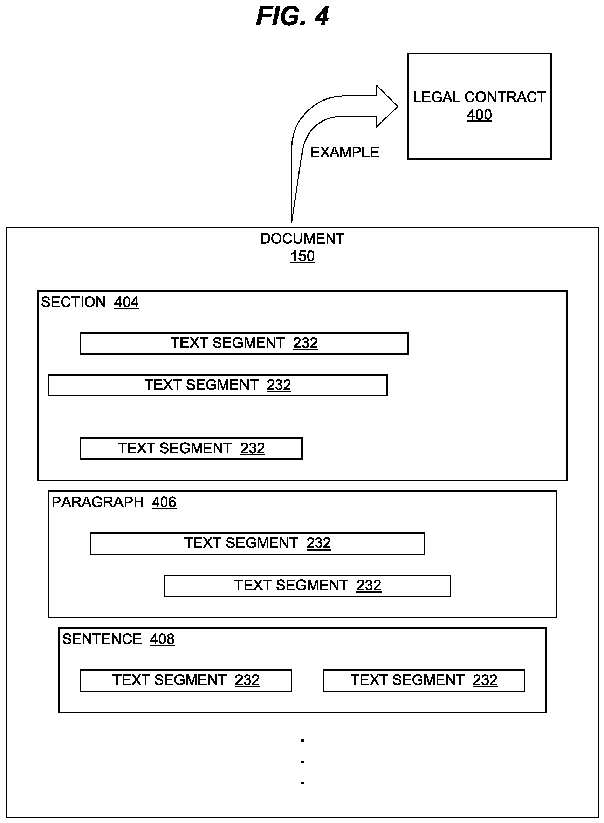

In the testing/deployment phase 204, ML manager 116 operates or implements ML model 110 (trained) to classify text segments 232 of an electronic document 150. FIG. 4 is a block diagram of an electronic document 150 in an illustrative embodiment. Electronic document 150 comprises a plurality of text segments 232. A text segment 232 of an electronic document 150 comprises a set, group, or sequence of words (including numbers), and may comprise a phrase, a clause, a sentence, or another sequence of words. Text segments 232 may be of varying length within electronic document 150, and one or more text segments 232 may be part of a section 404, a paragraph 406, a sentence 408, etc. One example of an electronic document 150 is a legal document or legal contract 400, although other types of documents are considered herein.

In FIG. 2, ML model 110 (trained) extracts text segments 232 from the electronic document(s) 150, and inputs or enters (unlabeled) text segments 232 into pre-trained ML model 220 to generate text segment vectors 234. A text segment vector 234 is a tuple of values that represents the text segment 232 of an electronic document 150. ML model 110 maps the text segment vectors 234 to subject matter categories 302, and determines, identifies, or outputs a risk level 310 for each of the text segments 232 based on a relation between respective text segment vectors 234 and the representative vectors 226 for the groups of text sample vectors 224. One technical benefit is one or more text segments 232 in the electronic document 150 are classified with a risk level 310. This advantageously provides an automated solution for performing a risk assessment on an electronic document 150 in a quick and efficient manner. The risk assessment may be repetitively performed on a large volume of electronic documents 150 to support individuals, business units, etc.

A further operation of document evaluator 100 is described below.

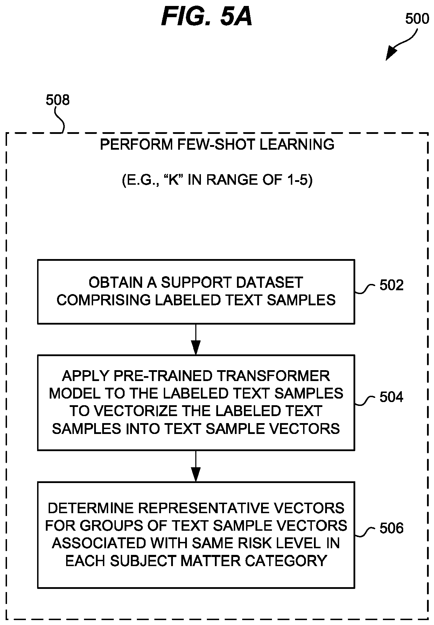

FIGS. 5A-5C are flow charts illustrating methods of performing operations described herein. More particularly, FIG. 5A is a flow chart illustrating a method 500 of training ML model 110 in an illustrative embodiment. The steps of method 500 will be described with reference to document evaluator 100 in FIG. 1, but those skilled in the art will appreciate that method 500 may be performed in other systems or devices. Also, the steps of the flow charts described herein are not all inclusive and may include other steps not shown, and the steps may be performed in an alternative order.

In the training phase 202, ML trainer 114 obtains a support dataset 210 comprising labeled text samples 212 associated with a plurality of subject matter categories 302 (step 502). As described above, a label 306 associated with each of the labeled text samples 212 comprises a risk level 310 corresponding to a labeled text sample 212. ML trainer 114 applies a pre-trained ML model 220 to the labeled text samples 212 to vectorize the labeled text samples 212 into text sample vectors 224 (step 504). In other words, ML trainer 114 inputs each of the labeled text samples 212 into pre-trained ML model 220 to output or generate the text sample vectors 224. ML trainer 114 then determines a representative vector 226 for groups of text sample vectors 224 associated with the same risk level 310 in each subject matter category 302 (step 506).

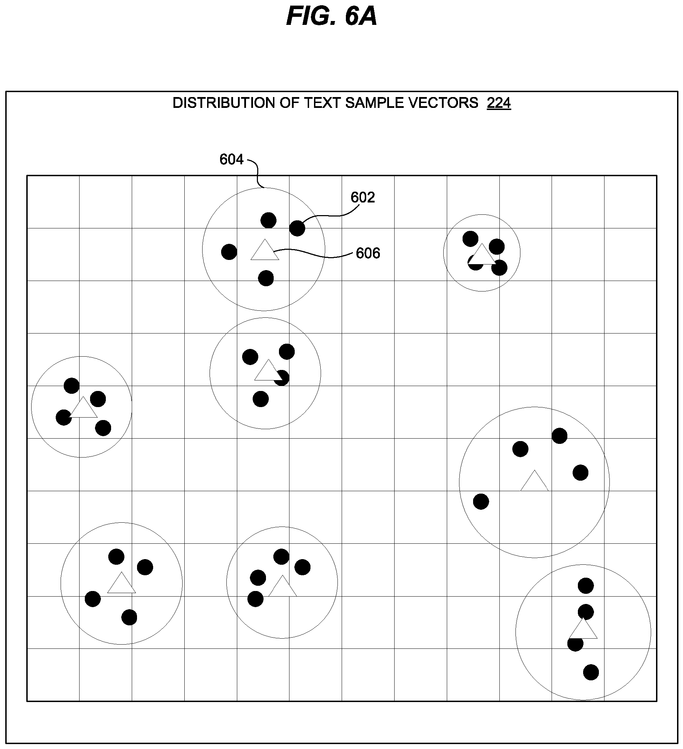

FIG. 6A illustrates an example of text sample vectors 224 clustered into groups 604 in an illustrative embodiment. FIG. 6A is a two-dimensional representation as an example, although the text sample vectors 224 may have many more dimensions. The text sample vectors 224 generated by pre-trained ML model 220 comprise data points 602. ML trainer 114 may cluster or partition the text sample vectors 224 into clusters or groups 604 using a clustering algorithm, such as a k-means clustering algorithm. The text sample vectors 224 of a group 604 correspond with the same risk level 310 of a subject matter category 302. ML trainer 114 determines or calculates a representative vector 226 for the groups 604 of text sample vectors 224. For example, ML trainer 114 may calculate or compute a centroid 606 of the text sample vectors 224 within each group 604, which may characterize a representative vector 226 for the group 604.

In an embodiment of FIG. 5A, ML trainer 114 may perform few-shot learning in training the ML model 110 (optional step 508). Few-shot learning is a method or paradigm that enables a pre-trained model to generalize over new categories of data (that the pre-trained model has not seen during training) using a small or limited set of labeled samples per class. In typical supervised learning, a large set of training samples is used to train an ML model. However, labeling of the training samples, such as by domain experts, is time-intensive and can be a hindrance to the training process. In few-shot learning, a limited number of labeled samples are defined per category (e.g., subject matter category 302 as described herein). For example, the limited number of labeled samples per category may be less than five, in a range of one to five, or another desired range. One technical benefit of few-shot learning is fewer labeled samples are needed to train an ML model, which makes training more efficient.

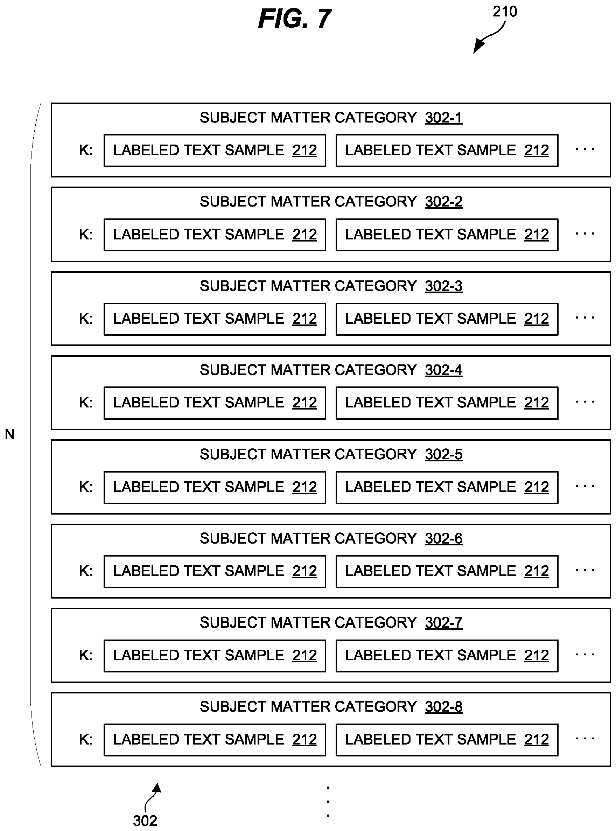

FIG. 7 is a block diagram of a support dataset 210 for few-shot learning in an illustrative embodiment. Few-shot learning may be referred to as an N-way K-shot learning scheme. N-way indicates that there are "N" numbers of categories (e.g., subject matter categories 302), and K-shot indicates the number of labeled samples (e.g., labeled text samples 212) for each of the categories. The "N" number of categories may be defined based on the number of novel subject matter categories defined for electronic documents 150, such as by domain experts in the standard format template 350. The "K" number of labeled samples may be defined based on the number of samples available or desired. Accuracy of the ML model may be improved as the "K" number is higher, but acquiring a higher number labeled samples is more labor-intensive. Thus, there may be a balance between the accuracy desired for the ML model, and the time/labor invested in training the ML model. In an embodiment, the "K" number of labeled text samples 212 for subject matter categories 302 may be less than five, in a range of one to five, or another desired range. Also, there is no requirement of the "K" number of labeled text samples 212 per subject matter category 302, as some subject matter categories 302 may have fewer that "K" or no labeled samples.

Although few-shot learning is described above, other methods or paradigms may be used to train ML model 110 using a limited set of labeled text samples 212.

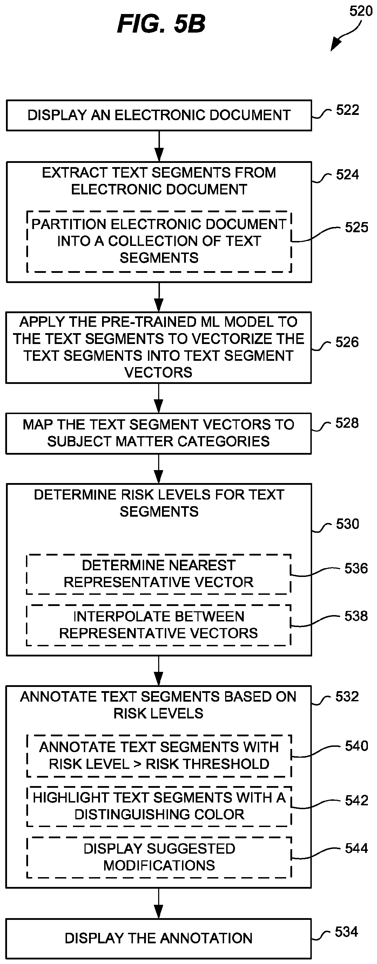

With ML model 110 trained, document evaluator 100 may use ML model 110 in a testing/deployment phase 204. FIG. 5B is a flow chart illustrating a method 520 of using the ML model 110 to evaluate one or more electronic documents 150 in an illustrative embodiment. As illustrated in FIG. 1, ML manager 116 displays an electronic document 150 (step 522), such as through GUI 105. ML manager 116 extracts one or more text segments 232 from the electronic document 150 (step 524). In an embodiment, ML manager 116 may apply ML model 111 to an electronic document 150 to partition the electronic document 150 into a collection of text segments 232 (optional step 525). For example, ML model 111 may perform an NLP pre-processing task to break down an electronic document 150 into smaller semantic units (e.g., limited by a certain number of words) or single clauses that comprise the text segments 232. The text segments 232 represent a query dataset that may be input into the ML model 110 for classification.

ML model 110 applies the pre-trained ML model 220 to the text segments 232 extracted from the electronic document 150 to vectorize the text segments 232 into text segment vectors 234 (step 526). In other words, ML manager 116 inputs each of the text segments 232 into pre-trained ML model 220 to output or generate the text segment vectors 234. ML model 110 maps the text segment vectors 234 to subject matter categories 302 (step 528). In other words, for each of the text segment vector 234, ML model 110 attempts to determine which subject matter category 302 is most closely associated with a text segment vector 234.

For a text segment 232 extracted from the electronic document 150, ML model 110 determines, identifies, or outputs a risk level 310 associated with the text segment 232 based on a relation between the text segment vector 234 (corresponding to the text segment 232) and the representative vectors 226 associated with the subject matter category 302 mapped to the text segment vector 234 (step 530). In an embodiment, ML model 110 may determine the risk level 310 for the text segment 232 by determining a nearest representative vector to the text segment vector 234 from the representative vectors 226 associated with the subject matter category 302 mapped to the text segment vector 234 (optional step 536).

In an example, ML model 110 may compare the text segment vector 234 with centroids 606 of the groups 604 as in FIG. 6A, such as with a similarity function, to compute a similarity score. ML model 110 may then identify the closest centroid 606 (i.e., the centroid 606 having the highest similarity score or a similarity score within a similarity threshold) to a text segment vector 234, and therefore, the nearest representative vector that corresponds with the text segment vector 234. The risk level 310 associated with the nearest representative vector may therefore represent or comprise the risk level 310 associated with the text segment 232.

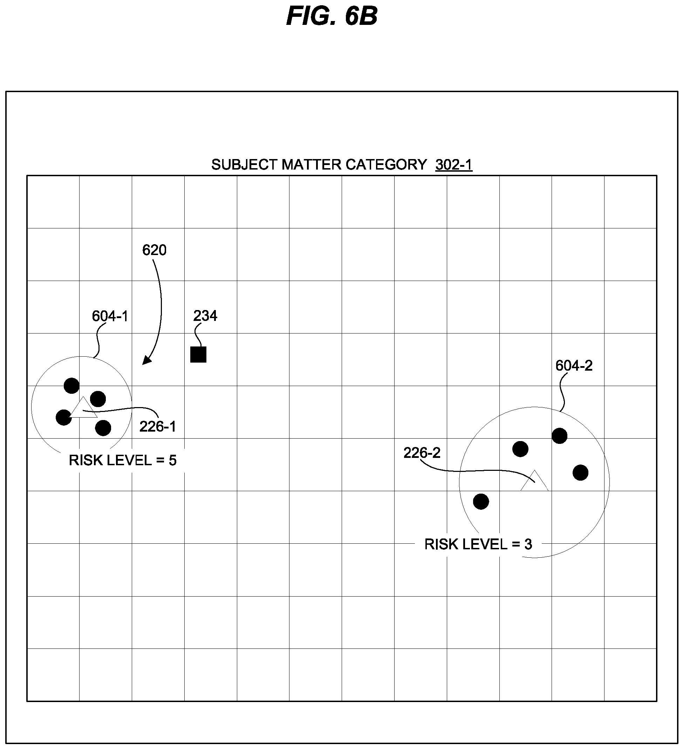

FIG. 6B illustrates groups 604 of text sample vectors 224 for a subject matter category 302-1 in an illustrative embodiment. It may be assumed for this embodiment that two groups (i.e., 604-1 and 604-2) of text sample vectors 224 exist for subject matter category 302-1. Group 604-1 has a representative vector 226-1 corresponding with a risk level 310 of "5", and group 604-2 has a representative vector 226-2 corresponding with a risk level 310 of "3". After ML model 110 maps a text segment vector 234 to subject matter category 302-1, ML model 110 determines the nearest representative vector to the text segment vector 234 from the representative vectors 226. In this example, representative vector 226-1 of group 604-1 is closest or nearest to text segment vector 234 and comprises the nearest representative vector 620. ML model 110 may therefore output a risk level 310 of "5" for the text segment 232.

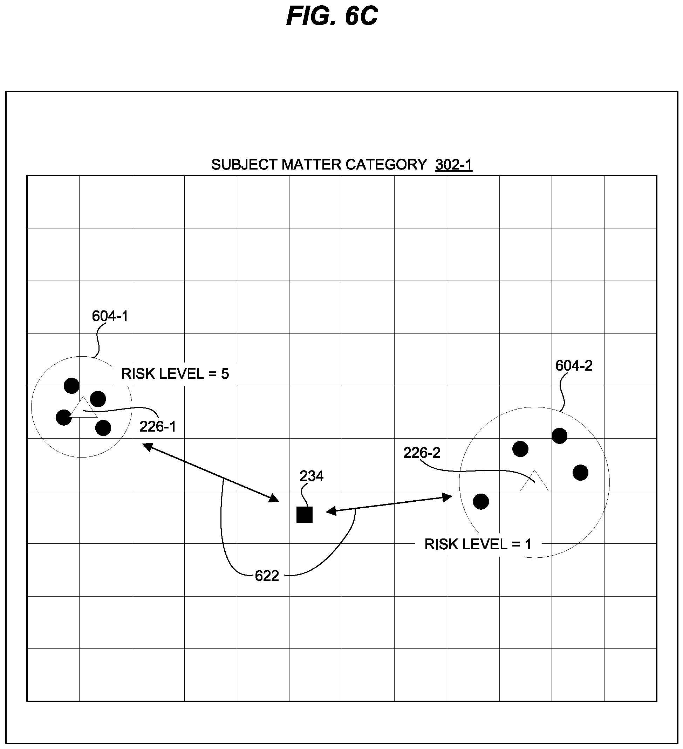

In another embodiment of FIG. 5B, ML model 110 may determine the risk level 310 associated with the text segment 232 based on an interpolation between two or more representative vectors 226 associated with the subject matter category 302 mapped to the text segment vector 234 (optional step 538). FIG. 6C illustrates groups 604 of text sample vectors 224 for a subject matter category 302-1 in an illustrative embodiment. In this example, group 604-1 has a representative vector 226-1 corresponding with a risk level 310 of "5", and group 604-2 has a representative vector 226-2 corresponding with a risk level 310 of "1". After ML model 110 maps a text segment vector 234 to subject matter category 302-1, ML model 110 attempts to determine the nearest representative vector to the text segment vector 234. In this example, the text segment vector 234 is "between" representative vectors 226-1 and 226-2. In other words, similarity scores calculated for the text segment vector 234 in relation to representative vectors 226-1 and 226-2 is below a similarity threshold. Thus, ML model 110 may output a risk level 310 between the risk level 310 associated with representative vector 226-1 and the risk level 310 associated with 226-2. In this example, ML model 110 may output a risk level of "3", which comprises an interpolation 622 between representative vectors 226-1 and 226-2.

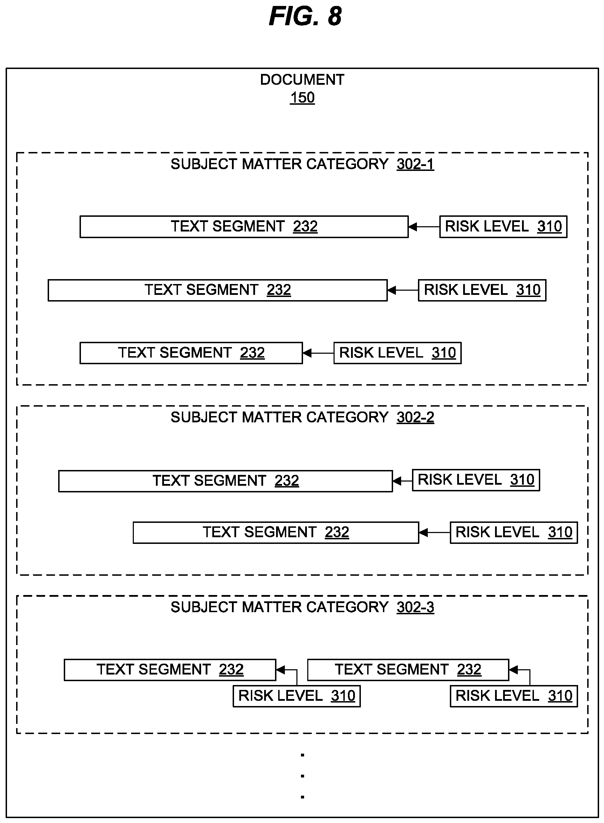

ML model 110 may determine a risk level 310 associated with each of or a plurality of text segments 232 extracted from the electronic document 150. FIG. 8 is a block diagram of subject matter categories 302 associated with text segments 232 of an electronic document 150 in an illustrative embodiment. ML model 110 outputs a risk level 310 associated with one or more text segments 232 in electronic document 150.

In FIG. 5B, evaluation manager 106 annotates one or more of the text segments 232 with an annotation based on the risk level 310 associated with text segment 232 (step 532). Evaluation manager 106 then displays the annotations for the text segments 232 in the electronic document 150 (step 534).

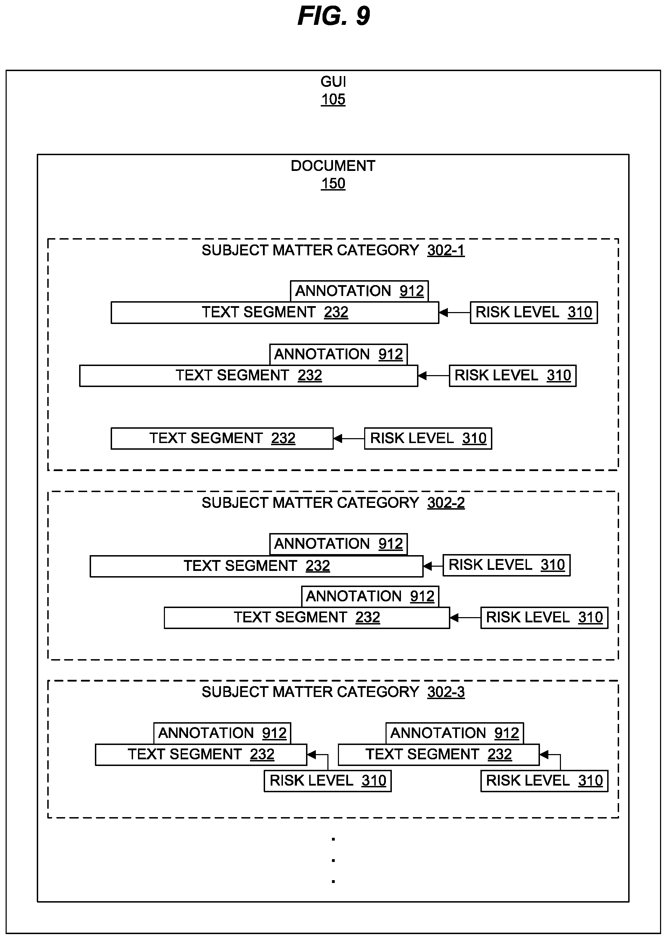

FIG. 9 is a block diagram illustrating GUI 105 displaying electronic document 150 in an illustrative embodiment. Evaluation manager 106 inserts the annotations 912 into the electronic document 150 so that the annotations 912 are displayed through GUI 105 (e.g., when the electronic document 150 is opened by an application, such as Microsoft Word, Adobe Acrobat, etc.). One technical benefit is the annotations 912 are provided (e.g., displayed) for the text segments 232 so that risky or adverse subject matter can be quickly identified the electronic document 150. For example, with an electronic document 150 opened by application 136, the annotations 912 to text segments 232 may be displayed in real-time or near-real-time to a user viewing the electronic document 150, such as through GUI 105.

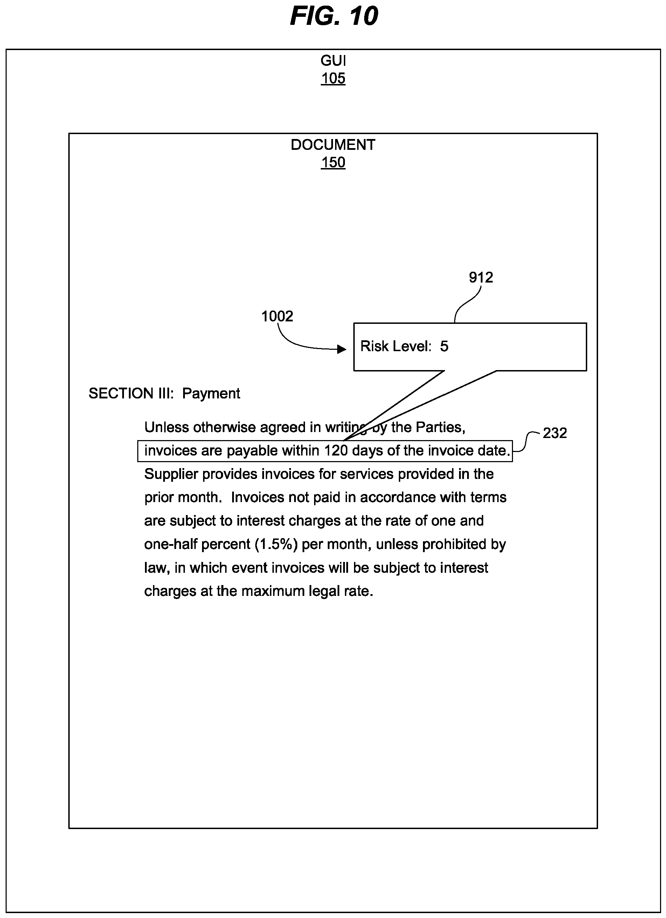

FIG. 10 is a block diagram illustrating a text segment 232 annotated in an electronic document 150 in an illustrative embodiment. Assume, for example, that an electronic document 150 is displayed via GUI 105. In the example of FIG. 10, a text segment 232 is mapped to a subject matter category 302 of "Payment", and is classified by ML model 110 with a risk level 310 of "5" within the "Payment" category. Evaluation manager 106 inserts annotation 912 into the electronic document 150 at a location proximate to the text segment 232. In this example, annotation 912 comprises a word balloon 1002 that points to the text segment 232, but annotation 912 may have a different format in other examples. Annotation 912 indicates the risk level 310 (e.g., "5") within the "Payment" category. Although one example of an annotation 912 is shown in FIG. 10, evaluation manager 106 may insert annotations 912 as a list at the beginning or end of the electronic document 150, as a footnote in the electronic document 150, etc.

In FIG. 5B, evaluation manager 106 may annotate one or more of the text segments 232 when the risk level 310 is above or greater than a risk threshold (optional step 540). For example, the risk levels 310 may comprise a range from one to five, and the risk threshold may be two. Evaluation manager 106 may therefore annotate the text segments 232 having a risk level 310 greater than two. One technical benefit is the annotations 912 may emphasize the text segments 232 exhibiting the highest risk.

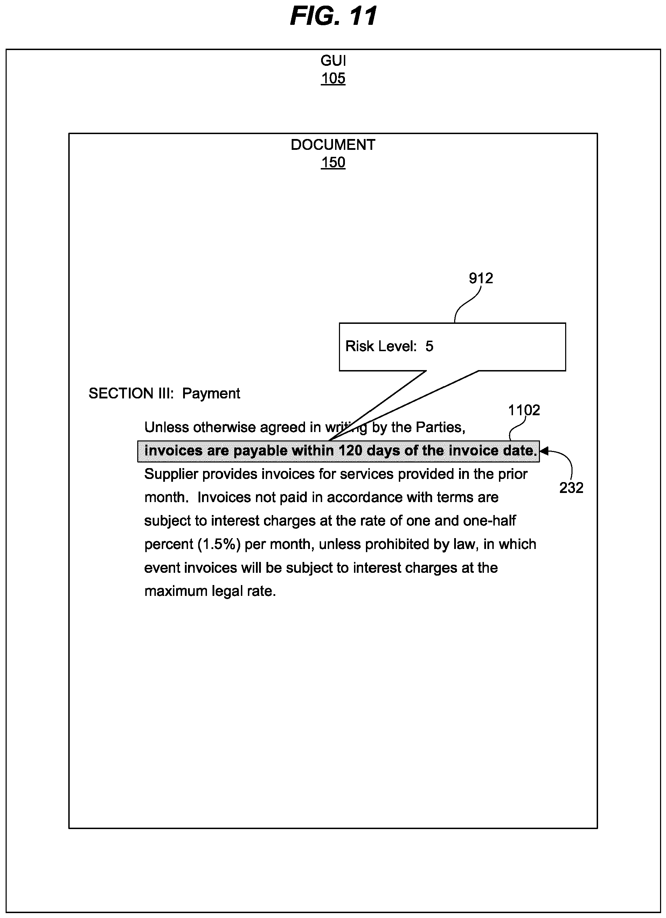

Evaluation manager 106 may annotate one or more of the text segments 232 in the electronic document(s) 150 by highlighting the text segments 232 with a distinguishing color (optional step 542). For example, evaluation manager 106 may shade a text segment 232 with a color (e.g., red, yellow, blue, etc.) distinctive from a background color of the electronic document 150. FIG. 11 is a block diagram illustrating a text segment 232 annotated in an electronic document 150 in an illustrative embodiment. In this example, text segment 232 is highlighted with a distinguishing color 1102. Evaluation manager 106 may additionally or alternatively bold and/or italicize the text segment 232.

In an embodiment, evaluation manager 106 may shade text segments 232 with different colors based on the risk level 310. For example, text segments 232 with a higher risk level 310 (e.g., risk level "5") may be highlighted with a first color (e.g., red), text segments 232 with a lower risk level 310 (e.g., risk level "4") may be highlighted with a second color (e.g., pink), text segments 232 with yet a lower risk level 310 (e.g., risk level "3") may be highlighted with a third color (e.g., yellow), etc. One technical benefit is the annotations 912 may visually emphasize risk of the text segments 232 in the electronic document 150.

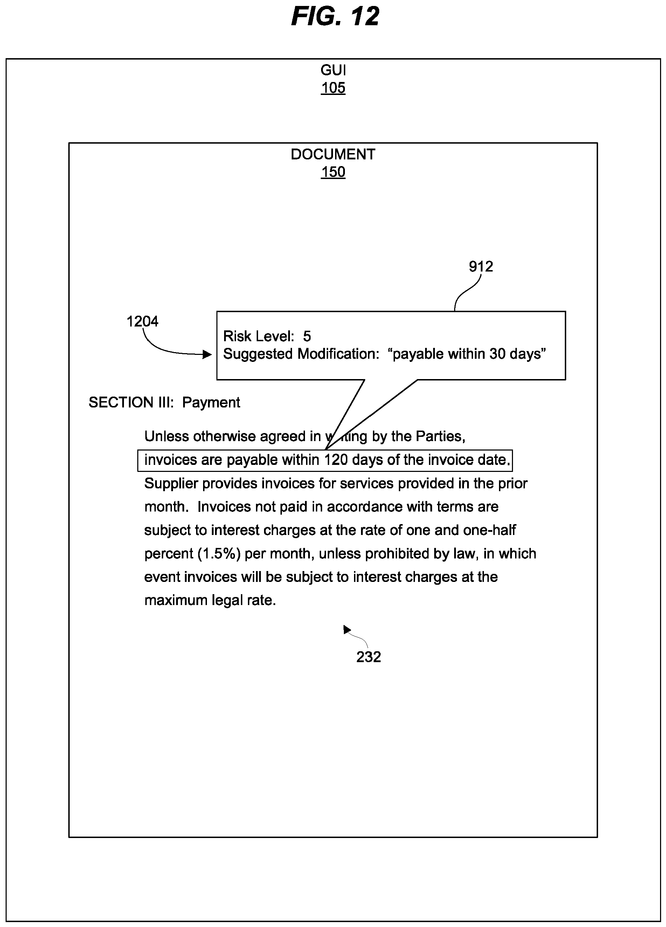

In FIG. 5B, evaluation manager 106 may insert suggested modifications regarding the text segments 232 in the electronic document 150 (optional step 544). Evaluation manager 106 may use a template, apply a ML model, or otherwise determine the suggested modifications to the text segments 232. FIG. 12 is a block diagram illustrating a text segment 232 annotated in an electronic document 150 in an illustrative embodiment. In this example, evaluation manager 106 inserts or includes a suggested modification 1204 of "payable within 30 days" in annotation 912. One technical benefit is evaluation manager 106 provides guidance about how to lower or reduce risk in certain subject matter of the electronic document 150.

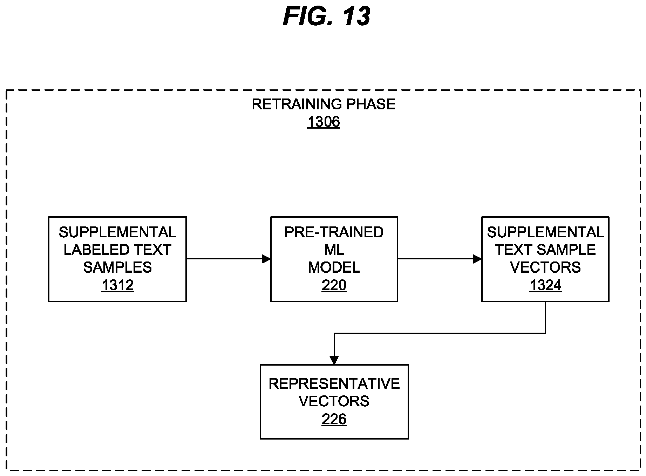

After or during the testing/deployment phase 204, document evaluator 100 may operate in a retraining phase. FIG. 13 is a schematic diagram of a retraining phase 1306 in an illustrative embodiment. In the retraining phase 1306, ML trainer 114 operates to retrain ML model 110 with supplemental labeled text samples 1312. A supplemental labeled text sample 1312 may comprise a sample in addition to the support dataset 210 originally used to train ML model 110. In an embodiment, a supplemental labeled text sample 1312 may comprise a text segment 232 of an electronic document 150 having a confidence score below a confidence threshold. For example, ML model 110 may output a confidence score along with a classification of a risk level 310 for a text segment 232. ML trainer 114 may mark or tag one or more text segments 232 having an associated confidence score below the confidence threshold. These text segments 232 may then be correctly labeled, such as with a human rater, to generate the supplemental labeled text samples 1312. ML trainer 114 may then retrain the ML model 110 using one or more of the supplemental labeled text samples 1312.

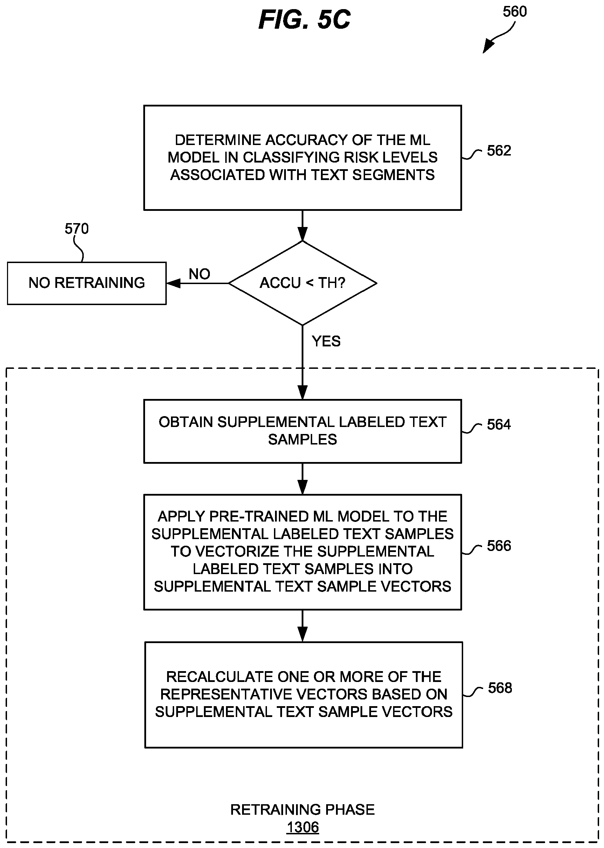

FIG. 5C is a flow chart illustrating a method 560 of retraining ML model 110 in an illustrative embodiment. ML manager 116 may determine an accuracy of ML model 110 in classifying risk levels 310 associated with the text segments 232 (step 562). When the accuracy is below an accuracy threshold, document evaluator 100 may enter the retraining phase 1306. In retraining phase 1306, ML trainer 114 obtains supplemental labeled text samples 1312 (step 564), and applies the pre-trained ML model 220 to the supplemental labeled text samples 1312 to vectorize the supplemental labeled text samples 1312 into supplemental text sample vectors 1324 (step 566). ML trainer 114 then recalculates one or more representative vectors 226 for the groups 604 of text sample vectors 224 based on the supplemental text sample vectors 1324 (step 568). When the accuracy is not below the accuracy threshold, document evaluator 100 may preclude retraining of ML model 110 (step 570). One technical benefit is the accuracy of the ML model 110 may be improved.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. A method comprising:
obtaining a dataset comprising labeled text samples associated with a plurality of subject matter categories, wherein a respective label associated with each of the labeled text samples comprises a risk level corresponding to a respective labeled text sample;
applying a pre-trained machine learning model to the labeled text samples to vectorize the labeled text samples into text sample vectors;
determining a respective representative vector for respective groups of the text sample vectors associated with a same risk level in each subject matter category;
displaying an electronic document;
extracting a text segment from the electronic document;
applying the pre-trained machine learning model to the extracted text segment to vectorize the extracted text segment into a text segment vector;
mapping the text segment vector to a subject matter category of the plurality of subject matter categories;
determining the risk level associated with the extracted text segment based on a relation between the text segment vector and representative vectors associated with the mapped subject matter category;
annotating the extracted text segment with an annotation based on the risk level associated with the extracted text segment; and
displaying the annotation for the extracted text segment in the displayed electronic document.

2. The method of claim 1, wherein the determining the risk level comprises:
determining a nearest representative vector to the text segment vector from the representative vectors associated with the mapped subject matter category, wherein the risk level associated with the nearest representative vector comprises the risk level associated with the extracted text segment.

3. The method of claim 1, wherein the determining the risk level comprises:
determining the risk level associated with the extracted text segment based on an interpolation between two or more of the representative vectors associated with the mapped subject matter category.

4. The method of claim 1, further comprising:
performing few-shot learning with the labeled text samples for N number of the subject matter categories, and K number of the labeled text samples from each of the N number of the subject matter categories;
wherein the K number of the labeled text samples is in a range of one to five.

5. The method of claim 1, wherein:
the annotating comprises annotating the extracted text segment when the risk level is above a risk threshold.

6. The method of claim 1, wherein:
the annotating comprises highlighting the extracted text segment with a distinguishing color.

7. The method of claim 1, wherein:
the annotating comprises displaying a suggested modification regarding the extracted text segment.

8. The method of claim 1, wherein:
the extracting comprises applying another machine learning model to partition the electronic document into a collection of text segments.

9. The method of claim 1, wherein:
the electronic document comprises a legal contract.

10. An apparatus comprising:
at least one processor; and
at least one memory storing instructions that, when executed by the at least one processor, cause the apparatus at least to:
obtain a dataset comprising labeled text samples associated with a plurality of subject matter categories, wherein a respective label associated with each of the labeled text samples comprises a risk level corresponding to a respective labeled text sample;
apply a pre-trained machine learning model to the labeled text samples to vectorize the labeled text samples into text sample vectors;
determine a respective representative vector for respective groups of text sample vectors associated with a same risk level in each subject matter category;
display an electronic document;
extract a text segment from the electronic document;
apply the pre-trained machine learning model to the extracted text segment to vectorize the extracted text segment into a text segment vector;
map the text segment vector to a subject matter category of the plurality of subject matter categories;
determine the risk level associated with the extracted text segment based on a relation between the text segment vector and representative vectors associated with the mapped subject matter category;
annotate the extracted text segment with an annotation based on the risk level associated with the extracted text segment; and
display the annotation for the extracted text segment in the displayed electronic document.

11. The apparatus of claim 10, wherein the at least one processor further causes the apparatus at least to:
determine a nearest representative vector to the text segment vector from the representative vectors associated with the mapped subject matter category, wherein the risk level associated with the nearest representative vector comprises the risk level associated with the extracted text segment.

12. The apparatus of claim 10, wherein the at least one processor further causes the apparatus at least to:
determine the risk level associated with the extracted text segment based on an interpolation between two or more of the representative vectors associated with the mapped subject matter category.

13. The apparatus of claim 10, wherein the at least one processor further causes the apparatus at least to:
perform few-shot learning with the labeled text samples for N number of the subject matter categories, and K number of the labeled text samples from each of the N number of the subject matter categories;
wherein the K number of the labeled text samples is in a range of one to five.

14. The apparatus of claim 10, wherein the at least one processor further causes the apparatus at least to:
annotate the extracted text segment when the risk level is above a risk threshold.

15. The apparatus of claim 10, wherein the at least one processor further causes the apparatus at least to:
highlight the extracted text segment with a distinguishing color.

16. The apparatus of claim 10, wherein the at least one processor further causes the apparatus at least to:
display a suggested modification regarding the extracted text segment.

17. The apparatus of claim 10, wherein the at least one processor further causes the apparatus at least to:
apply another machine learning model to partition the electronic document into a collection of text segments.

18. The apparatus of claim 10, wherein:
the electronic document comprises a legal contract.

19. A computer readable medium embodying programmed instructions which, when executed by a processor, are operable for performing a method comprising:
obtaining a dataset comprising labeled text samples associated with a plurality of subject matter categories, wherein a respective label associated with each of the labeled text samples comprises a risk level corresponding to a respective labeled text sample;
applying a pre-trained machine learning model to the labeled text samples to vectorize the labeled text samples into text sample vectors;
determining a respective representative vector for respective groups of the text sample vectors associated with a same risk level in each subject matter category;
displaying an electronic document;
extracting a text segment from the electronic document;
applying the pre-trained machine learning model to the extracted text segment to vectorize the extracted text segment into a text segment vector;
mapping the text segment vector to a subject matter category of the plurality of subject matter categories;
determining the risk level associated with the extracted text segment based on a relation between the text segment vector and representative vectors associated with the mapped subject matter category;
annotating the extracted text segment with an annotation based on the risk level associated with the extracted text segment; and
displaying the annotation for the extracted text segment in the displayed electronic document.

20. The computer readable medium of claim 19, wherein the determining the risk level comprises:
determining a nearest representative vector to the text segment vector from the representative vectors associated with the mapped subject matter category, wherein the risk level associated with the nearest representative vector comprises the risk level associated with the extracted text segment.
